# FASCICULE DE BREVET EUROPEEN

(11) **EP 0 582 495 B1**
(45) Date de publication et mention de la délivrance du brevet: **26.02.1997**
(21) Numéro de dépôt: 93401694.0
(22) Date de dépôt: 30.06.1993
(51) Int. Cl.: C08F 8/32, C08F 8/48

(54) **Procédé nouveau de préparation de polymères ou copolymères à base de méthacrylate de méthyle(MAM) modifiés**
Verfahren zur Herstellung von modifizierten Polymeren und Copolymeren aus Methylmethacrylat
Process for the manufacture of modified polymers and copolymers based on methyl methacrylate

(30) Priorité: 04.08.1992 FR 9209650
(43) Date de publication de la demande: 09.02.1994
(73) Titulaire: ELF ATOCHEM S.A., 92800 Puteaux (FR)
(72) Inventeur: Gaillard, Patrice, F-62153 Fouchez (FR); Heim, Philippe, F-64000 Pau (FR); Nowe, Stéphane, F-64000 Pau (FR)
(74) Mandataire: Luziau, Nelly

(56) Documents cités:
- EP-A- 0 203 724
- EP-A- 0 441 148
- FR-A- 2 393 818

## Description

La présente invention a pour objet un procédé nouveau de préparation de polymères ou copolymères à base de méthacrylate de méthyle (MAM) modifiés par imidation, à l'aide d'amine, des fonctions esters qu'ils comportent et conduisant à l'obtention de polymères ou copolymères présentant des propriétés améliorées. Elle concerne en outre les polymères ou copolymères à base de MAM modifiés par imidation résultant de la mise en oeuvre du procédé précité.

On connaît depuis fort longtemps des procédés de production de polyméres à base de MAM subissant un traitement d'imidation à l'aide d'une amine, par exemple par imidation:
- sur polymère fondu en extrudeuse,
- sur polymère dissous dans un solvant,
- sur polymère en suspension en phase aqueuse.
Ces procédés présentent un certain nombre d'inconvénients.
Ainsi, les procédés d'imidation à l'état fondu cités ci-dessus présentent l'inconvénient d'un mauvais contrôle et d'une hétérogénéité de l'imidation dus à une réaction entre le polymère fondu très visqueux et un gaz (la méthylamine par exemple), réaction qui doit se produire en un temps très court (3 à 5 min, temps de séjour dans l'extrudeuse). Ils présentent aussi l'inconvénient d'une hétérogénéité de la température au sein du polymère fondu.
Les procédés en phase homogène en milieu solvant présentent l'inconvénient de nécessiter une dévolatilisation coûteuse et en outre de conduire à des polymères ou copolymères comportant des taux de fonctions carboxyliques ou anhydrides supérieurs.
Les procédés en suspension aqueuse présentent l'inconvénient que la réaction passe par un stade de dissolution des perles du fait de la formation de fonctions carboxyliques, ce qui conduit à une importante augmentation de la viscosité, et que le polymère ne reprécipite en fin de réaction que de manière incomplète. Ils présentent en outre l'inconvénient de donner lieu à des taux d'acide et d'amide résiduels élevés et donc de conduire à un polymère ou copolymère modifié présentant de mauvaises propriétés optiques et de vieillissement.

Le procédé selon la présente invention supprime les inconvénients cités ci-dessus et présente les avantages suivants:
- modification du polymère gonflé d'amines sous forme de microperles en suspension dans un non-solvant hydrophobe (alcanes) qui assure:
   . un bon contrôle du taux d'imidation par suite de la durée de réaction;
   . un taux d'acide ou d'anhydride faible,
   . un bon contrôle de la température du polymère grâce à la suspension dans le fluide qui régule la température;
- une récupération aisée des produits de l'imidation par essorage sans nécessiter une opération de dévolatilisation. De plus, le procédé selon l'invention conduit à l'obtention desdits polymères ou copolymères, modifiés par imidation, présentant de bonnes propriétés, notamment transparence, résistance au vieillissement et aux agents chimiques.

De plus, le procédé selon l'invention permet d'obtenir un PMAM modifié résistant à une température supérieure de 20 à 60°C à celle du PMAM non modifié obtenu par les procédés de l'art antérieur. Le PMAM modifié obtenu présente en fait une température de transition vitreuse (Tg) plus élevée que les PMAM standards.

Le procédé selon l'invention, en outre, est moins coûteux dans sa mise en oeuvre que les procédés nécessitant une étape d'évaporation de solvant et présente un meilleur contrôle du taux d'imidation que celui du procédé en extrudeuse.

La présente invention a pour objet un procédé nouveau de préparation de polymères ou copolymères à base de MAM modifiés par imidation, à l'aide d'amine, des fonctions esters qu'ils comportent, ce procédé consistant à produire le polymère ou copolymère à base de MAM par polymérisation sous forme de perles du polymère ou copolymère, et étant caractérisé en ce que l'imidation est effectuée sur lesdites perles en suspension dans un agent non-solvant hydrophobe.

Selon une forme de réalisation de l'invention, le diamètre moyen des perles est compris entre 10 et 1 000 µm; et de préférence de l'ordre de 100 à 700 µm.

Selon une autre forme de réalisation de l'invention, l'imidation des perles de PMAM est effectuée in situ, après polymérisation précipitante du MAM dans l'agent non-solvant hydrophobe sous forme de perles.

Selon encore une forme de réalisation de l'invention, l'imidation est effectuée directement après la polymérisation précipitante.

Selon encore une autre forme de réalisation de l'invention, l'imidation est effectuée à une température comprise entre 180 et 250°C.

Selon une forme de réalisation de l'invention, la montée de température se fait par paliers successifs.

Selon une autre forme de réalisation de l'invention, la montée de température se fait en continu et lentement.

Selon encore une forme de réalisation de l'invention, la durée de l'étape d'imidation est de l'ordre de 1 à 8 heures.

Selon encore une autre forme de réalisation de l'invention, l'agent non-solvant hydrophobe est un alcane en C₁ à C₁₂, de préférence un alcane en C₆ à C₁₀.

En fait, l'objet de l'invention, du fait que l'imidation des perles selon le procédé de l'invention conduit à un PMAM modifié présentant une Tg plus élevée que celle du PMAM standard est d'être en état d'obtenir un PMAM résistant à la chaleur dont la Tg soit fonction de l'utilisation envisagée du PMAM modifié. Le polymère modifié selon l'invention présente le moins possible de groupes acides dont la présence entraîne le jaunissement du polymère, donne lieu à une reprise d'eau gênante plus importante et, en général, nécessite un traitement ultérieur. De plus, il faut également que le taux d'amide contenu dans le PMAM modifié ainsi obtenu ne soit pas élevé pour également éviter le jaunissement du polymère.

L'agent non-solvant hydrophobe employé peut être, entre autres et de façon non limitative, tout alcane dont le nombre d'atomes de carbone ne soit pas trop élevé pour permettre l'élimination de traces éventuelles dans le PMAM modifié lors de la mise en oeuvre et dans lequel les perles soient insolubles alors que le MAM monomère y est soluble. Peuvent convenir à cette fin, entre autres, les alcanes en C₆ à C₁₀.

Dans le cas de l'imidation effectuée sur des perles préalablement obtenues, par exemple des perles déjà commercialisées ou préparées aux fins de subir le traitement d'imidation selon l'invention, et mises sous forme de suspension, on emploie de préférence des perles d'homopolymères ou copolymères à base d'au moins 80% de MAM et de comonomères comme l'acide (meth)acrylique, les acrylates d'alkyle, le styrène, les styrènes substitués, les diènes dont le butadiène. Sont particulièrement. convenables les copolymères de MAM et d'acrylate d'éthyle ou de méthyle dont les proportions sont de l'ordre de 90 à 99% de MAM et de 10 à 1% du comonomère acrylique. De préférence, pour obtenir une suspension convenable pour la mise en oeuvre de l'invention, la quantité de perles de PMAM dans la suspension est inférieure ou égale à 60% du mélange sous forme de suspension.

L'imidation peut être effectuée in situ immédiatement après la polymérisation précipitante ayant conduit à l'obtention d'une suspension de fines particules. Pour cette polymérisation, on ajoute à l'agent hydrophobe, non-solvant du PMAM et contenant le MAM, un catalyseur (par exemple un peroxyde tel que peroxyde de lauryle), un limitateur de chaîne (par exemple un mercaptan, tel que le dodécylmercaptan). On chauffe à une température de l'ordre de 80°C pour obtenir la précipitation du PMAM dans le non-solvant (comme cela est illustré dans l'exemple 10 ci-dessous).

Une fois que les perles de PMAM sont en suspension dans le non-solvant, que ce soient les perles du commerce ou les perles obtenues par précipitation in situ, l'emploi d'agent de suspension est nécessaire pour éviter la coalescence des perles à haute température. En effet, alors que lorsque l'on opère à une température inférieure 130°C, il n'y a pas de risque de prise en masse, celle-ci se produit à une température supérieure s'il n'est pas employé d'agent de suspension, c'est-à-dire pour une Tg supérieure de 20° à 30°C à celle de la Tg du PMAM non modifié conformément à l'invention. A titre d'agent de suspension, on peut employer tout agent de suspension connu permettant de stabiliser les perles de PMAM en suspension dans un alcane; en particulier un copolymère d'acrylate ou de méthacrylate de nonyle et de MAM comportant une proportion de l'ordre de 70 à 95% de l'acrylate ou méthacrylate. L'emploi d'un copolymère d'acrylate ou méthacrylate de stéaryle et de MAM peut également convenir.

L'amine employée pour l'étape d'imidation est toute amine primaire convenable dont le point d'ébullition n'est pas trop élevé pour éviter que ne se produisent des problèmes lors de la mise en oeuvre du polymère modifié. L'amine est toute amine primaire RNH₂, où R est un groupe alkyle en C₁-C₁₂, cycloalkyle en C₆-C₁₁ ou aryle en C₆-C₁₀. De préférence, l'amine consiste en méthylamine ou cyclohexylamine, l'emploi de méthylamine étant tout particulièrement préféré. On peut aussi employer des composés générateurs d'amines, par exemple de l'urée.

La proportion d'amine ajoutée dépend de l'imidation que l'on veut obtenir (et donc de la Tg). L'emploi d'une proportion trop élevée d'amine peut conduire à l'obtention d'un PMAM coloré en jaune, ce qu'il faut éviter. L'amine peut être introduite au début en une seule fois, en continu ou en plusieurs fois.

Avec la méthylamine, on obtient un polymère présentant des fonctions imides et acides. Le pourcentage en acide est inférieur lorsque l'on opère par le procédé en suspension par comparaison avec le procédé antérieur où l'on opère en solution (ainsi que le montrent les exemples 15 et 16 ci-dessous).

Avec la cyclohexylamine, on obtient un polymère présentant des fonctions acides, imides et amides. Le polymère peut présenter une coloration jaune due à la présence d'amide, et donc l'emploi de cyclohexylamine est moins favorable à l'obtention àe PMAM modifié conforme à l'invention que ne l'est l'emploi de méthylamine. Cependant, ces polymères à coloration jaune sont encore acceptables, car on peut facilement les traiter par un colorant et/ou un agent azurant.

Le mélange non-solvant/perles/agent de suspension/amine est chauffé pour permettre l'imidation. En général, on chauffe à une température supérieure à 150°C, de préférence de l'ordre de 180 à 250°C. Il faut que la température ne soit pas trop élevée pour éviter le jaunissement du PMAM modifié résultant. La durée de traitement varie de 1 à 8 heures (en fonction du matériau utilisé) et, de préférence, est de 1 à 5 heures.
La montée en température peut se faire ou bien par paliers successifs, ou bien en continu et lentement, ainsi que le montrent les exemples ci-dessous.
La température et la durée du traitement sont réglées pour obtenir le taux d'imide (et par conséquent la Tg) voulu. Ainsi par exemple, avec ½ mole d'amine pour 1 mole d'ester, et en opérant à 210°C pendant 3 heures, on obtient 40% de fonction imide (avec méthylamine).

Dans le cas où au lieu d'opérer sur des perles antérieurement obtenues, on opère selon le procédé d'imidation in situ après polymérisation précipitante, on réalise la polymérisation du PMAM dans l'agent non-solvant, comme indiqué précédemment, puis on ajoute l'amine et l'agent de suspension et on opère comme pour le procédé décrit ci-dessus mis en oeuvre sur suspension de perles, préalablement obtenues.

Selon un mode de réalisation de la présente invention, l'amine initialement employée est ajoutée en une seule fois.

Selon un autre mode de réalisation de l'invention, l'amine initialement employée est ajoutée en plusieurs lots.

Selon encore un mode de réalisation de l'invention, l'amine initialement employée est ajoutée en continu.

Selon un autre mode encore de réalisation de l'invention, l'agent de suspension consiste en un mélange de copoly(meth)acrylate de nonyle/MAM ou copoly(meth)acrylate de stéaryle/MAM.

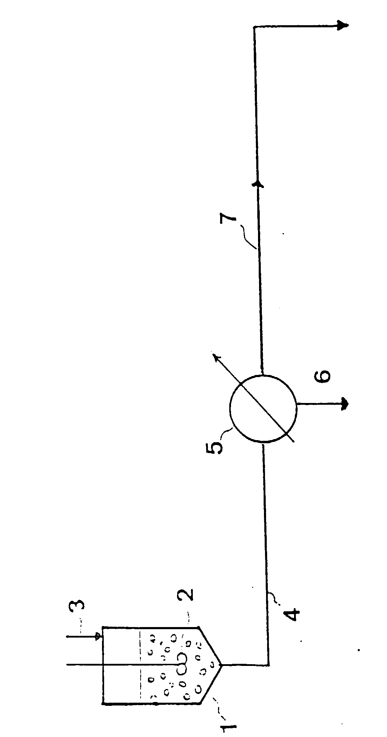

D'autres buts et avantages de la présente invention apparaîtront à la lecture de la description suivante et de la figure jointe donnée à titre illustratif et nullement limitatif qui représente un mode de réalisation d'un schéma simplifié d'installation susceptible de permettre la réalisation du procédé selon l'invention.
Il s'agit dans cet exemple de réalisation d'un procédé opérant en discontinu; il est évident que le procédé selon l'invention peut être mis en oeuvre en continu.

Cette installation comporte un réacteur d'imidation 1, destiné à contenir une suspension dans un alcane des perles de PMAM. Ce réacteur d'imidation 1 est muni de moyens d'agitation 2, d'une conduite 3 d'injection d'amine et d'une conduite 4 d'évacuation de la suspension dans un alcane des perles de PMAM ayant subi la réaction d'imidation. La suspension ayant subi ladite imidation est amenée par la conduite 4 dans une enceinte 5 de séparation du non-solvant par essorage. L'agent non-solvant hydrophobe est récupéré par la conduite 6 et peut être recyclé. Les perles imidées sont amenées par la conduite 7 dans une enceinte (non représentée) permettant le séchage et la récupération des perles imidées obtenues. Les perles séchées ainsi obtenues peuvent être transformées par tout moyen convenable en granulés de PMAM modifié, utiles pour la fabrication de plaques ou d'articles moulés.

Les exemples suivants, donnés à titre non limitatif, illustrent diverses conditions de mise en oeuvre du procédé de l'invention.

### EXEMPLE 1

Cet exemple porte sur l'imidation d'une suspension composée de 70% d'une coupe en C₁₀ (décane) et de 30% de perles de PMAM préalablement synthétisées.

La coupe décane dans laquelle on a additionné 1% (calculé par rapport aux perles de PMAM) d'un copolymère statistique à 75% de nonylméthacrylate et 25% de méthacrylate de méthyle, est introduite dans un réacteur résistant à la pression.

On introduit, tout en maintenant sous agitation, les perles de PMAM de diamètre moyen de 600 µm. Enfin, 0,5 mole de cyclohexylamine pour 1 mole d'ester est additionnée.

La suspension est portée à 210°C en 4 heures, maintenue 2 heures à cette température, puis refroidie. Les perles imidées ainsi obtenues sont séparées de la coupe décane par essorage puis séchées.

L'analyse infrarouge met en évidence que le polymère a bien une structure méthacrylimide contenant des groupements imides, amides, acides, esters.

| | Tg en °C | % Azote | % Acide | % Imide | % Amide | % Ester |
|---|---|---|---|---|---|---|
| Exemple 1 | 149 | 2,1 | 5 | 8 | 18 | 69 |

Tous les % sont massiques.

### EXEMPLE 2

La procédure est identique à l'exemple 1 excepté que l'on emploie la méthylamine à la place de la cyclohexylamine.

L'analyse infrarouge met en évidence un polymère à structure méthacrylimide mais ne contenant pas de groupements amides.

| | Tg en °C | % Azote | % Acide | % Imide | % Amide | % Ester |
|---|---|---|---|---|---|---|
| Exemple 2 | 133 | 3,5 | 2 | 33 | 0 | 65 |

### EXEMPLES 3 à 9

Différents essais ont été réalisés dans des conditions identiques à celles de l'exemple 1. Seules la nature de l'amine, la température, la durée du palier de température ont été éventuellement modifiées.

Les résultats sont présentés dans le tableau ci-après.

| | Nature Amine utilisée | T° palier (°C) | Durée du palier (h) | Tg (%) | % Azote | % Acide | % Amide | % Imide | % ester |
|---|---|---|---|---|---|---|---|---|---|
| Exemple 1 | cyclohexyle | 210° | 2 | 149 | 2.1 | 5 | 18 | 8 | 69 |
| Exemple 2 | méthyle | 210° | 2 | 133 | 3.5 | 2 | 0 | 33 | 65 |
| Exemple 3 | cyclo | 210° | 3 | 154 | 2.6 | 6 | 28 | 11 | 55 |
| Exemple 4 | cyclo | 210° | 4 | 164 | 3.20 | 6 | 28 | 14 | 52 |
| Exemple 5 | méthyle | 210° | 3 | 135 | 3.5 | 2 | 0 | 35 | 63 |
| Exemple 6 | méthyle | 210° | 4 | 136 | 4.1 | 2 | 0 | 40 | 58 |
| Exemple 7 | méthyle | 220° | 2 | 133 | 3.9 | 2 | 0 | 38 | 57 |
| Exemple 8 | méthyle | 230° | 2 | 134 | 3.9 | 2 | 0 | 43 | 55 |
| Exemple 9 | méthyle | 170° | 2 | 119 | 2.6 | 3 | 0 | 23 | 75 |
| | | 190° | 2 | | | | | | |
| Rapport molaire amine/ester égal à 0.5. | | | | | | | | | |

### EXEMPLE 10

Cet exemple porte sur la polymérisation précipitante conduisant à l'obtention d'une suspension de fines particules du MAM en milieu alcane puis l'imidation in situ, au sein de la suspension.

Une solution contenant 30% de méthacrylate de méthyle et 70% d'hexane est introduite dans un réacteur. A la solution, on additionne 0,5% d'un copolymère statistique à 75% de nonylméthacrylate et 25% de méthacrylate de méthyle, 0,3% de ter-dodécylmercaptan, 0,3% de peroxyde de lauryle.
On polymérise le mélange sous agitation à 75°C.
Le polyméthacrylate de méthyle ainsi obtenu est sous forme de fines particules en suspension.
La polymérisation terminée, on introduit dans le réacteur 0,5 mole de méthylamine pour 1 mole d'ester et l'on porte à 210°C en 4 heures, puis l'on maintient 2 heures.
Après refroidissement, on sépare par filtration les fines particules de l'hexane et on les sèche.

L'analyse infrarouge met en évidence que les polymère présente une structure méthacrylimide contenant des groupements imides, amides, acides, esters.

| | Tg en °C | % Azote | % Acide | % Imide | % Amide | % Ester |
|---|---|---|---|---|---|---|
| Exemple 10 | 132 | 3,4 | 2 | 34 | 0 | 64 |

### EXEMPLE 11

La procédure est identique à celle de l'exemple n° 1, sauf qu'après 1 h 30 de palier à 210°C, 0,5 mole de cyclohexylamine est introduit en 30 minutes par l'intermédiaire d'une pompe doseuse et que le palier est prolongé de 2 heures. Cet ajout d'amine permet d'obtenir des polymères fortement imides tout en préservant la qualité de stabilité de la suspension.

| | Tg en °C | % Azote | % Acide | % Imide | % Amide | % Ester |
|---|---|---|---|---|---|---|
| Exemple 11 | 186 | 4,9 | 7 | 25 | 39 | 29 |

### EXEMPLE 12

On opère dans des conditions identiques à celles de l'exemple 11 si ce n'est que l'on emploi de la méthylamine à la place de la cyclohexylamine.

| | Tg en °C | % Azote | % Acide | % Imide | % Amide | % Ester |
|---|---|---|---|---|---|---|
| Exemple 12 | 143 | 4,9 | 2 | 55 | 0 | 43 |

### EXEMPLES 13 et 14

On opère dans des conditions identiques à celles des exemples 11 et 12 sauf qu'après 2 h 30 de palier à 210°C, on procède à un ajout de 0,5 mole d'amine que l'on introduit en 30 minutes, puis à 2 h 30 de palier supplémentaire à 220°C.

| | Nature amine | Tg en °C | % Azote | % Acide | % Imide | % Amide | % Ester |
|---|---|---|---|---|---|---|---|
| Exemple 13 | cyclo | 188 | 6,3 | 6 | 66 | 27 | 1 |
| Exemple 14 | méthyle | 172 | 7 | 3 | 84 | 0 | 13 |

### EXEMPLES 15 et 16

Il s'agit d'un exemple comparatif correspondant à une modification en suspension/solution.

Le tableau ci-dessous montre que la modification du PMAM en suspension dans un non-solvant en comparaison avec le cas de la modification en solution dans le xylène permet d'obtenir des polymères moins riches en acide pour des taux d'imidation identiques.

| | Type modification | Nature amine | T° de modification | % Acide | % Imide | % Amide | % Ester |
|---|---|---|---|---|---|---|---|
| Exemple 1 | en suspension | cyclo | 210° | 5 | 8 | 18 | 69 |
| | en solution | cyclo | 210° | 10 | 10 | 31 | 49 |
| Exemple 2 | en suspension | méthyle | 210° | 2 | 34 | 0 | 65 |
| | en solution | méthyle | 210° | 8 | 32 | 0 | 60 |

## Revendications

1. Procédé nouveau de préparation de polymères ou copolymères à base de MAM modifié par imidation, à l'aide d'amine, des fonctions esters qu'ils comportent, ce procédé consistant à produire le polymère ou copolymère à base de MAM par polymérisation sous forme de perles et étant caractérisé en ce que l'imidation est effectuée sur lesdites perles de PMAM en suspension dans un agent non-solvant hydrophobe

2. Procédé selon la revendication 1, caractérisé en ce que le diamètre moyen des perles est compris entre 10 et 1 000 µm.

3. Procédé selon la revendication 1, caractérisé en ce que l'imidation des perles de PMAM est effectuée in situ après polymérisation précipitante du MAM dans l'agent non-solvant hydrophobe, sous forme de perles.

4. Procédé selon la revendication 3, caractérisé en ce que l'imidation est effectuée directement après polymérisation précipitante.

5. Procédé selon une quelconque des revendications 1 à 4, caractérisé en ce que l'imidation est effectuée à une température comprise entre 180 et 250°C.

6. Procédé selon la revendication 5, caractérisé en ce que la température est augmentée jusqu'à 180 à 250°C par paliers successifs.

7. Procédé selon la revendication 5, caractérisé en ce que la température est augmentée jusqu'à 200 à 240°C en continu et lentement.

8. Procédé selon l'une quelconque des revendications 1 à 7, caractérisé en ce que la durée de l'étape d'imidation est de l'ordre de 1 à 8 heures.

9. Procédé selon l'une quelconque des revendications 1 à 8, caractérisé en ce que l'agent non-solvant hydrophobe est un alcane, de préférence en C₆ à C₁₀.

10. Procédé selon l'une quelconque des revendications 1 à 9, caractérisé en ce que l'amine est ajoutée en une seule fois.

11. Procédé selon l'une quelconque des revendications 1 à 9, caractérisé en ce que l'amine est ajoutée en plusieurs lots.

12. Procédé selon l'une quelconque des revendications 1 à 9, caractérisé en ce que l'amine est ajoutée en continu.

13. Procédé selon l'une quelconque des revendications 1 à 12, caractérisé en ce que l'agent de suspension consiste en un mélange copoly(meth)acrylate de nonyle/MAM ou copoly(meth)acrylate de stéaryle/MAM.

## Claims

1. New process for the preparation of polymers or copolymers based on MMA modified by imidation, with the aid of amine, of the ester functional groups which they contain, this process consisting in producing the MMA-based polymer or copolymer by polymerization in the form of pearls and being characterized in that the imidation is performed on the said PMMA pearls in suspension in a hydrophobic nonsolvent agent.

2. Process according to Claim 1, characterized in that the mean diameter of the pearls is between 10 and 1000 µm.

3. Process according to Claim 1, characterized in that the imidation of the PMMA pearls is performed in situ after precipitating polymerization of the MMA in the hydrophobic nonsolvent agent, in the form of pearls.

4. Process according to Claim 3, characterized in that the imidation is performed directly after precipitating polymerization.

5. Process according to any one of Claims 1 to 4, characterized in that the imidation is performed at a temperature of between 180 and 250°C.

6. Process according to Claim 5, characterized in that the temperature is increased to 180 to 250°C by successive plateaus.

7. Process according to Claim 5, characterized in that the temperature is increased to 200 to 240°C continuously and slowly.

8. Process according to any one of Claims 1 to 7, characterized in that the duration of the imidation stage is of the order of 1 to 8 hours.

9. Process according to any one of Claims 1 to 8, characterized in that the hydrophobic nonsolvent agent is an alkane, preferably from C₆ to C₁₀.

10. Process according to any one of Claims 1 to 9, characterized in that the amine is added only once.

11. Process according to any one of Claims 1 to 9, characterized in that the amine is added in a number of lots.

12. Process according to any one of Claims 1 to 9, characterized in that the amine is added continuously.

13. Process according to any one of Claims 1 to 12, characterized in that the suspending agent consists of a nonyl (meth)acrylate/MMA copolymer or stearyl (meth)acrylate/MMA copolymer mixture.

## Patentansprüche

1. Neues Verfahren zur Herstellung von Polymeren oder Copolymeren auf Basis von modifiziertem Methylmethacrylat (MMA) durch Imidbildung an den in ihnen enthaltenen Esterfunktionen mittels eines Amins, wobei dieses Verfahren darin besteht, das Polymer oder Copolymer auf Basis von MMA durch Polymerisation in Form von Perlen herzustellen, und dadurch gekennzeichnet ist, daß die Imidbildung an diesen PMMA-Perlen in Suspension in einem hydrophoben Nichtlösemittel durchgeführt wird.

2. Verfahren nach Anspruch 1, dadurch gekennzeichnet, daß der mittlere Durchmesser der Perlen zwischen 10 und 1000 µm liegt.

3. Verfahren nach Anspruch 1, dadurch gekennzeichnet, daß die Imidifizierung der PMMA-Perlen in situ nach der Fällungspolymerisation des MMA in dem hydrophoben Nichtlösemittel in Form von Perlen durchgeführt wird.

4. Verfahren nach Anspruch 3, dadurch gekennzeichnet, daß die Imidifizierung direkt nach der Fällungspolymerisation durchgeführt wird.

5. Verfahren nach einem der Ansprüche 1 bis 4, dadurch gekennzeichnet, daß die Imidifizierung bei einer Temperatur zwischen 180 und 250 °C durchgeführt wird.

6. Verfahren nach Anspruch 5, dadurch gekennzeichnet, daß die Temperatur bis auf 180 bis 250 °C stufenweise erhöht wird.

7. Verfahren nach Anspruch 5, dadurch gekennzeichnet, daß die Temperatur kontinuierlich und langsam bis auf 200 bis 240 °C erhöht wird.

8. Verfahren nach einem der Ansprüche 1 bis 7, dadurch gekennzeichnet, daß die Dauer des Imidifizierungsschrittes in der Größenordnung von 1 bis 8 Stunden liegt.

9. Verfahren nach einem der Ansprüche 1 bis 8, dadurch gekennzeichnet, daß das hydrophobe Nichtlösemittel ein Alkan, vorzugsweise ein C₆- bis C₁₀-Alkan, ist.

10. Verfahren nach einem der Ansprüche 1 bis 9, dadurch gekennzeichnet, daß das Amin in einem einzigen Schritt hinzugegeben wird.

11. Verfahren nach einem der Ansprüche 1 bis 9, dadurch gekennzeichnet, daß Amin in mehreren Chargen hinzugegeben wird.

12. Verfahren nach einem der Ansprüche 1 bis 9, dadurch gekennzeichnet, daß das Amin kontinuierlich hinzugegeben wird.

13. Verfahren nach einem der Ansprüche 1 bis 12, dadurch gekennzeichnet, daß das Suspendierungsmittel aus einer Mischung von Copolynonyl(meth)acrylat/MMA oder Copolystearyl(meth)acrylat/MMA besteht.
